# EUROPEAN PATENT SPECIFICATION

(11) **EP 1 994 633 B1**
(45) Date of publication and mention of the grant of the patent: **23.05.2018**
(21) Application number: 07712442.8
(22) Date of filing: 05.03.2007
(51) Int. Cl.: H02M 3/158

(54) **BUCK-BOOST DC/DC CONVERTER**
AUFWÄRTS/ABWÄRTSGLEICHSTROMWANDLER
CONVERTISSEUR CONTINU CONTINU ABAISSEUR-ÉLÉVATEUR

(30) Priority: 03.03.2006 DE 102006009956
(43) Date of publication of application: 26.11.2008
(73) Proprietor: TEXAS INSTRUMENTS DEUTSCHLAND GMBH, 85356 Freising (DE)
(72) Inventor: PREXL, Franz, 85445 Neiderding (DE); BAYER, Eric-Johann, 85395 Thonhausen (DE); NEUHAEUSLER, Juergen, 83043 Bad Aibling (DE)
(74) Representative: Zeller, Andreas
(86) International application number: PCT/EP2007/052057
(87) International publication number: WO 2007/099174

(56) References cited:
- EP-A- 1 601 091
- US-B1- 6 215 286
- US-B1- 6 348 781
- GABORIAULT M ET AL: "A high efficiency, non-inverting, buck-boost DC-DC converter" APPLIED POWER ELECTRONICS CONFERENCE AND EXPOSITION, 2004. APEC '04. NINETEENTH ANNUAL IEEE ANAHEIM, CA, USA 22-26 FEB. 2004, PISCATAWAY, NJ, USA,IEEE, 22 February 2004 (2004-02-22), pages 1411-1415, XP010704365 ISBN: 0-7803-8269-2

## Description

The present invention relates to a buck-boost DC/DC converter with an inductor and a power stage including a set of switches selectively connecting the inductor between a voltage input, a voltage output and a reference level (ground) in accordance with buck or boost mode.

Conventionally, two ramp signals are used to control the duty cycle of the switches in the converter, one for buck operation and one for boost operation. Such a control is exemplarily disclosed in document US 6,348,781 B1. Comparators compare the output signal of an error amplifier with the ramp signals to generate the pulse width modulation signal for controlling the switches in the converter stage. In buck operation, the input signal is higher than the output signal. In boost operation, the input signal is lower than the output signal. When the input voltage is in a range close to the output voltage, a change between buck and boost mode occurs. The change between buck and boost mode involves a discontinuity in the transfer function at the transition point. A gap between the ramp signals would result in an interruption of the pulse with modulation, and unpredictable low frequency noise would occur. To avoid this problem, conventional approaches provide a wide overlap between the two ramp signals. Due to the overlap between the ramp signals, the switches in the converter power stage are operated in both of the buck mode and the boost mode. In the overlap region, the converter operates in a buck-boost mode. With a wide overlap, buck-boost operation results over a wide range of supply voltage. While the buck-boost operation avoids the discontinuity problem, this is achieved at the expense of efficiency. Due to the actuation of all the switches in the power stage in each clock period, a lot of energy is lost by dissipation. The result is an efficiency curve with a dip in the range where the supply voltage is close to the output voltage. Since this is a condition in which the converter is operated most of the time, the reduced efficiency in buck-boost operation is a major drawback.

The present invention provides a buck-boost DC/DC converter which avoids the buck-boost operation in the range where the supply voltage is close to the output voltage, thereby improving the efficiency in that range. Specifically, the invention provides a buck-boost DC/DC converter with an inductor and a power stage having a set of switches selectively connecting the inductor between a voltage input, a voltage output and a reference level (ground) in accordance with buck or boost mode. The converter has a switch control block providing control signals to the set of switches in the power stage. A comparator block provides to the switch control block a first pulse width modulation signal in buck mode and a second pulse width modulation signal in boost mode. A ramp generator block provides to the comparator block a first ramp signal for buck mode and a second ramp signal for boost mode. An overlap control block provides a ramp shift signal to the ramp generator in response to a detection signal that indicates activity of the switches in the power stage. The ramp shift signal adjusts the first and second ramp signals relative to each other so as to minimize any gap and any overlap between the first and second ramp signals. Whenever actuation of all switches in the power stage within the same clock period is detected, the ramp signals are adjusted in a sense to reduce the overlap between the ramp signals. Conversely, when no switch activity is detected in a clock period, the ramp signals are adjusted in a sense to increase the overlap between the ramp signals. As a result, when the input voltage is close to the output voltage, the converter alternatively operates in buck mode or in boost mode, avoiding operation in a buck-boost mode. Also, since the ramp signals are adjusted by a closed loop, any offsets and temperature drifts are cancelled automatically. In order to adjust the ramp signals the charge currents to the capacitors used in the ramp generator block are modulated. In a preferred embodiment, the ramp signal for the buck mode has a rising slope and the ramp signal for the boost mode has a falling slope. Over conventional designs where both ramps have a positive slope, the inverted slope of the boost ramp surprisingly provides a reduced switching noise.

In the preferred embodiment, the level of the ramp signal for boost mode is shifted down to increase the overlap between the first and second ramp signals, and the level of the ramp signal for buck mode is shifted down to decrease the overlap between the first and second ramp signals. This is preferred because of a relatively simple circuit implementation. Generally, however, other kinds of adjustment are possible. In particular, it is even possible to shift the level of one ramp signals in both senses without shifting the other ramp signal.

Further advantages and features of the invention will appear from the following detailed description with reference to the appending drawings. In the drawings:
Fig. 1 is a block diagram of the DC/DC converter;
Fig. 2 is a simplified circuit diagram of a power stage in the converter;
Fig. 3 is a schematic diagram of the duty-cycle control loop in the converter;
Fig. 4 is a schematic circuit diagram of a ramp signal generator block used in the converter;
Fig. 5 is a signal diagram showing clock signals used in the ramp signal generator block;
Fig. 6 is a signal diagram showing the ramp signals produced by the ramp signal generator block; and
Fig. 7 is a circuit diagram of a ramp signal overlap control block.

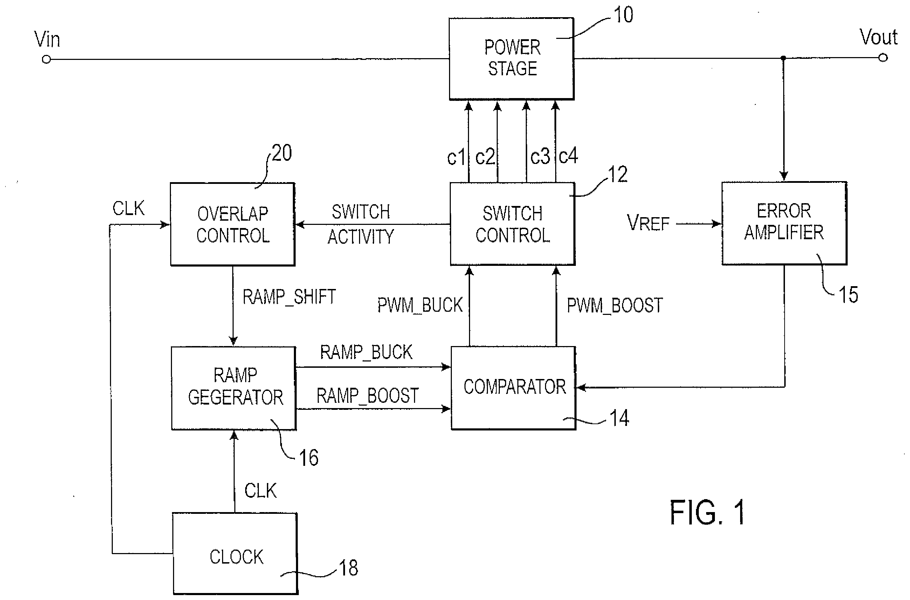

With reference to Fig. 1, the buck-boost DC/DC converter has a power stage 10 with a supply voltage input Vin, an output Vout and switch control inputs c1 to c4. The switch control signals c1 to c4 are supplied by a switch control block 12 which receives pulse width modulates signals PWM_buck and PWM_boost from a comparator block 14. The comparator block 14 receives on one of its inputs the output signal of an error amplifier 15, which compares the output voltage Vout with a reference signal VREF. Ramp signals Ramp_buck and Ramp_boost from a ramp signal generator 16 are applied to two further inputs of comparator block 14. Ramp generator 16 is driven by a clock signal CLK from a clock generator 18. On a control input the ramp generator 16 receives a ramp shift control signal Ramp_shift from a ramp overlap control block 20. The ramp overlap control block 20 receives a switch activity indication signal Switch_activity from switch control block 12, thereby closing a control loop.

Although separate building blocks are shown in Fig. 1, it should be understood that the converter is implemented as an integrated circuit.

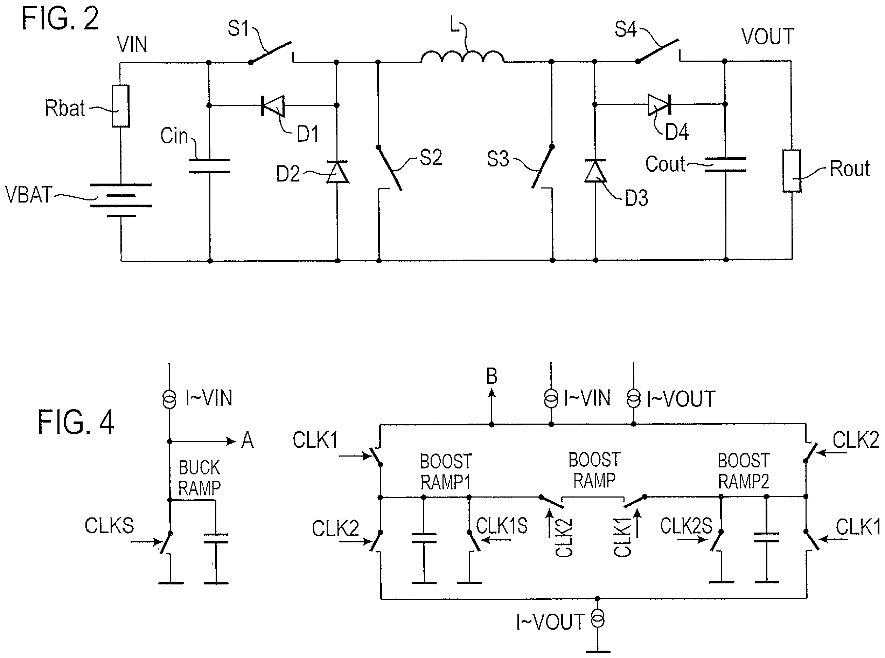

In a typical non-inverting buck-boost converter the power stage is configured as shown in Fig. 2. It has an inductor L, four switches S1 to S4, input and output capacitors Cin and Cout and an output load that is represented by a resistor Rout. A supply voltage VIN is taken from a battery VBAT the internal resistance of which is represented by a resistor Rbat. Diodes D1 to D4 are just parasitic components. The four switches are usually implemented as power MOS transistors, the gates of which are driven by the signals c1 to c2.

In buck mode, when the input voltage is higher than the output voltage, S1 and S2 are switching while S3 is open and S4 is closed. In boost mode, when the input voltage is lower than the output voltage, S3 and S4 are switching while S1 is closed and S2 is open.

The duty cycle in buck mode is defined as the on-time of S1 divided by the clock period. It increases to 100 % when the input voltage decreases to the value of the output voltage. The duty cycle in boost mode is defined as the on-time S3 divided by the clock period. It starts with 0 % and increases when the input voltage decreases below the value of the output voltage. Changing from buck mode to boost mode and vice versa does not happen smoothly. There is a discontinuity in the transfer function at that transition point. To avoid this problem, conventionally always all four switches are clocked within one clock period. The drawback of this buck-boost operation is less efficiency due to switching losses. Also, the transition point cannot be defined accurately enough to avoid either a gap without any switching or an overlap region where all four switches are active. The discontinuity remains whenever the mode of operation changes.

Known non-inverting buck-boost converters usually regulate the duty cycle that is required for a desired output voltage by comparing two ramp generators with an error amplifier output signal. The ramps can have a saw tooth or triangular waveform. A comparator detects when the error amplifier output crosses the bottom ramp and controls S1 and S2 accordingly. In boost mode, the error amplifier output is higher than the bottom ramp. S1 is always ON and S2 always OFF. In this case the second comparator will detect the crossing with the top ramp which controls S3 and S4.

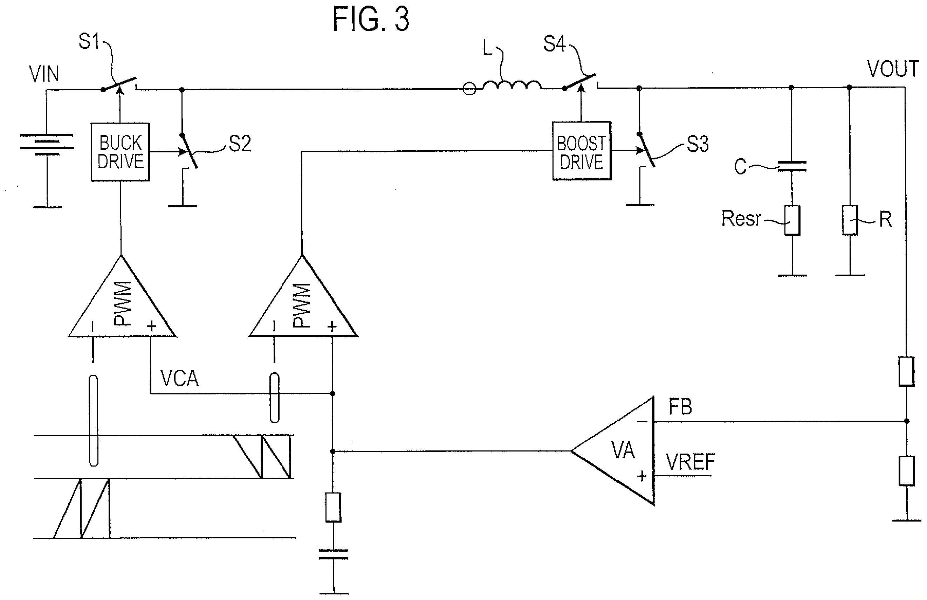

With reference to Fig. 3, the improved buck-boost converter of the invention takes a similar approach, but the relationship of the ramp signals is different.

Specifically, switch control block 12 in Fig. 1 is split into separate blocks "Buck Drive" and "Boost Drive" driven by signals PWM_buck and PWM_boost generated by comparators Comp_buck and Comp_boost, respectively. Both comparators receive an output VCA from an error amplifier CA on their non-inverting inputs and ramp signals on the inverting inputs. The ramp signal for comparator Comp_buck is a saw-tooth signal with a rising (positive) slope and a level which. in the specific embodiment disclosed, is between 0 (ground) and VIN/2. The ramp signal for comparator Comp_boost sits "on top" of the buck ramp signal. It has a falling (negative) slope and a level which, in the specific embodiment disclosed, is between VIN/2 and VIN/2+VOUT/2. The buck ramp is proportional to VIN and the boost ramp is proportional to VOUT. The absolute height of the ramps has been chosen as high as possible within the supply range. There is neither an overlap nor a gap between the two ramp signals.

As discussed above, an overlap between the two ramps avoids discontinuity in the converter's transfer function at the expense of efficiency. A gap between the ramps would stop all activity of switches S1 to S4, producing unpredictable low frequency switching noise.

In the inventive approach, the ramp signals are adjusted with a control loop to minimize the overlap and to minimize also the gap between the ramp signals, thereby avoiding buck and boost operation within the same clock cycle. The control loop also cancels offsets and temperature drifts automatically.

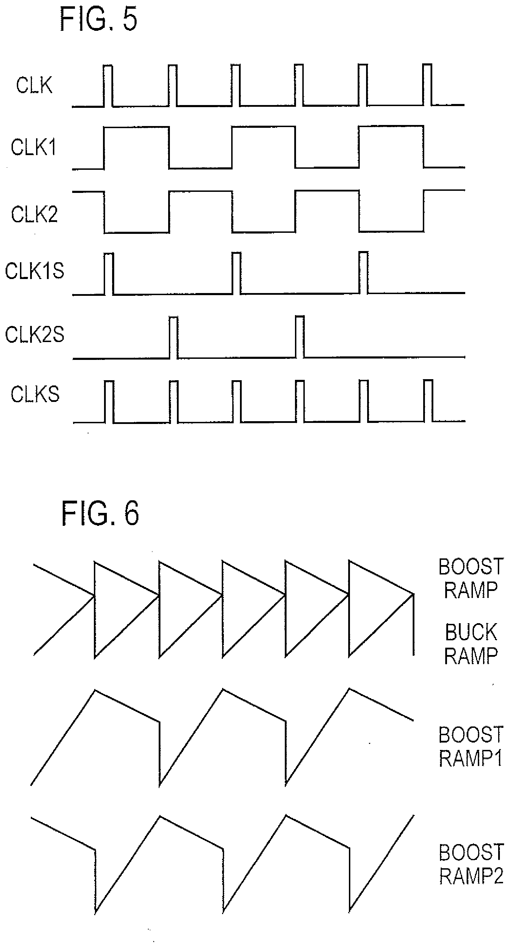

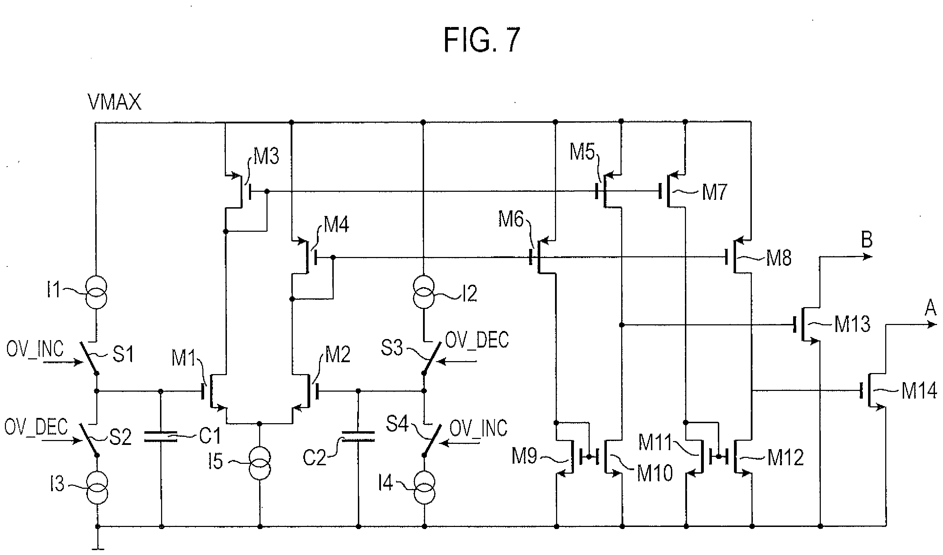

The ramp signal generator in Fig. 4 produces the "BUCK RAMP" with a simple current source, capacitor and a switch controlled by clock signal CLK, and the "BOOST RAMP" with a combination of current sources, capacitors and switches controlled by clock signals CLK1, CLK2, CLK1S, CLK2S and CLKS, all derived from the clock signal CLK generated by the clock generator, as illustrated in Fig. 5. The resulting ramp signals are shown in Fig. 6. The "BOOST RAMP" sits on top of the "BUCK RAMP" without any overlap and without any gap. The "BOOST RAMP" is combined from separately generated ramp signals "BOOST RAMP1" and "BOOST RAMP 2" with the switches controlled by clock signals CLK1 and CLK2, as is easily understood. Between a node "A" and ground a variable impedance formed by the channel of a MOS transistor (M14, Fig. 7) is connected, as will be explained with reference to Fig. 7. Similarly, between a node "B" and ground a variable impedance formed by the channel of another MOS transistor (M13, Fig. 7) is connected, as will be explained with reference to Fig. 7. With these variable impedances the effective charge currents to the capacitors in the ramp signal generator are modulated as required.

In the preferred embodiment, the current source for generating the BUCK RAMP supplies a current proportional to the input voltage VIN. Likewise, the current sources for the rising and falling ramps of the BOOST RAMP provide currents proportional to the input and output voltages, respectively. This feed-forward concept ensures a constant loop gain over the range of supply voltages.

With reference to Fig. 7, the ramp overlap control block (20 in Fig. 1) receives detection signals OV_INC and OV_DEC to control switches SW1 to SW4. <B>.

Whenever a buck and boost mode switching is detected within one clock period, S2 and S3 are closed in figure 7. As a result, C1 is discharged and C2 is charged, current through M13 decreases and current through M14 increases. No switch activity within one clock period closes S1 and S4. C1 is charged and C2 is discharged, current through M13 increases and current through M14 decreases.

The drain of M13 is connected to the common node B of the two current sources coming from VMAX and of the two switches clocked by CLK1 and CLK2 in figure 4. The drain of M14 is connected to the signal BUCK RAMP in figure 4 at node A.

In the embodiment disclosed, the variable impedance at node A in Fig. 4 is effective to reduce the maximum ramp level of the buck ramp. Similarly, the variable impedance at node B in Fig. 4 is effective to shift the bottom of the boost ramp to a lower level. This approach was chosen for simplicity of circuit design. Other approaches would be to adjust the level of the buck ramp only or of the boost ramp only, or other combinations of ramp adjustment, as long as the ramp overlap and the gap between the ramps are minimized.

An additional benefit of the invention is achieved by inverting the slope of the boost ramp relative to that of the buck ramp. As was found, the switching noise influence is reduced to a minimum with this approach.

## Claims

1. A buck-boost DC/DC converter with an inductor (L) and a power stage having a set of switches (S1-S4) selectively connecting the inductor between a voltage input, a voltage output and a reference level in accordance with buck or boost mode, comprising
a switch control block (12; BUCK DRIVE, BOOST DRIVE) providing control signals to the set of switches,
a comparator block (14) providing to the switch control block (12; BUCK DRIVE, BOOST DRIVE) a first pulse width modulation signal (PWM_BUCK) in buck mode and a second pulse width modulation signal (PWM_BOOST) in boost mode,
a ramp generator block (16) providing to the comparator block (14) a first ramp signal (BUCK RAMP) for buck mode and a second ramp signal (BOOST RAMP) for boost mode,
and an overlap control block (20) providing a ramp shift signal (RAMP_SHIFT) to the ramp generator (16) in response to a detection signal that indicates activity of the set of switches in the power stage;
and **characterised in that**
the ramp generator block (16; Fig.4) includes current sources and capacitors for generating the ramp signals, and the charge currents to the capacitors are modulated to increase or decrease the levels of the ramp signals in response to the ramp shift signal (RAMP_SHIFT), thereby adjusting the first and second ramp signals (BUCK RAMP, BOOST RAMP) relatively to each other so as to minimize any gap and any overlap between the first and second ramp signals.

2. The converter according to claim 1, wherein the ramp signal for the buck mode (RAMP_BUCK) has a rising slope and the ramp signal for the boost mode (RAMP_BOOST) has a failing slope.

3. The converter according to claim 1 or claim 2, wherein the level of the ramp signal for boost mode (BOOST RAMP) is shifted down to increase the overlap between the first and second ramp signals, and the level of the ramp signal for buck mode (BUCK RAMP) is shifted down to decrease the overlap between the first and second ramp signals.

4. The converter according to any of claims 1 to 3, wherein the ramp generator block (16; Fig.4) includes a current source that supplies a current proportional to the input voltage.

5. The converter according to any of claims 1 to 4, wherein the ramp generator block (16; Fig.4) includes a current source that supplies a current proportional to the output voltage.

## Patentansprüche

1. Abwärts-Aufwärts-DC/DC-Wandler mit einer Spule (L) und einer Leistungsstufe, die einen Satz von Schaltern (S1-S4) aufweist, der die Spule gemäß einem Abwärts- oder Aufwärtsmodus selektiv zwischen einen Spannungseingang, einen Spannungsausgang und einen Referenzpegel schaltet, umfassend einen Schaltersteuerblock (12; BUCK DRIVE; BOOST DRIVE), der dem Satz von Schaltern Steuersignale zuführt,
einen Komparatorblock (14), der dem Schaltersteuerblock (12; BUCK DRIVE, BOOST DRIVE) in einem Abwärtsmodus ein erstes Pulsweitenmodulationssignal (PWM_BUCK) und in einem Aufwärtsmodus ein zweites Pulsweitenmodulationssignal (PWM_BOOST) zuführt,
einen Rampengeneratorblock (16), der dem Komparatorblock (14) ein erstes Rampensignal (BUCK RAMP) für den Abwärtsmodus und ein zweites Rampensignal (BOOST RAMP) für den Aufwärtsmodus zuführt,
und einen Überlappsteuerblock (20), der dem Rampengenerator (16) ein Rampenverschiebungssignal (RAMP_SHIFT) zuführt, als Reaktion auf ein Detektionssignal, das Aktivität des Satzes von Schaltern in der Leistungsstufe anzeigt;
und **dadurch gekennzeichnet, dass**
der Rampengeneratorblock (16; Figur 4) Stromquellen und Kondensatoren zum Erzeugen der Rampensignale beinhaltet und die Ladeströme zu den Kondensatoren moduliert werden, um die Pegel der Rampensignale als Reaktion auf das Rampenverschiebungssignal (RAMP_SHIFT) anzuheben oder abzusenken, dabei das erste und das zweite Rampensignal (BUCK RAMP, BOOST RAMP) relativ zueinander anpassend, um somit jegliche Lücke und jeglichen Überlapp zwischen dem ersten und dem zweiten Rampensignal zu minimieren.

2. Wandler nach Anspruch 1, wobei das Rampensignal für den Abwärtsmodus (RAMP_BUCK) eine ansteigende Steigung aufweist und das Rampensignal für den Aufwärtsmodus (RAMP_BOOST) eine abfallende Steigung aufweist.

3. Wandler nach Anspruch 1 oder Anspruch 2, wobei der Pegel des Rampensignals für den Aufwärtsmodus (BOOST RAMP) runtergeschoben wird, um den Überlapp zwischen dem ersten und dem zweiten Rampensignal zu vergrößern, und der Pegel des Rampensignals für den Abwärtsmodus (BUCK RAMP) runtergeschoben wird, um den Überlapp zwischen dem ersten und dem zweiten Rampensignal zu verkleinern.

4. Wandler nach einem der Ansprüche 1 bis 3, wobei der Rampengeneratorblock (16; Figur 4) eine Stromquelle beinhaltet, die einen zu der Eingangsspannung proportionalen Strom liefert.

5. Wandler nach einem der Ansprüche 1 bis 4, wobei der Rampengeneratorblock (16; Figur 4) eine Stromquelle beinhaltet, die einen zu der Ausgangsspannung proportionalen Strom liefert.

## Revendications

1. Convertisseur C.C./C.C dévolteur-survolteur à bobine d'induction (L) et étage de puissance ayant un ensemble de commutateurs (S1 à S4) connectant sélectivement la bobine d'induction entre une entrée de tension, une sortie de tension et un niveau de référence conformément au mode de dévoltage ou de survoltage, comprenant
un bloc de commande de commutateurs (12 : BUCK DRIVE, BOOST DRIVE) fournissant des signaux de commande à l'ensemble de commutateurs,
un bloc comparateur (14) fournissant au bloc de commande de commutateurs (12 ; BUCK DRIVE, BOOST DRIVE) un premier signal de modulation en largeur d'impulsion (PWM_BUCK) en mode de dévoltage et un second signal de modulation en largeur d'impulsion (PWM_BOOST) en mode de survoltage,
un bloc générateur de rampe (16) fournissant au bloc comparateur (14) un premier signal de rampe (BUCK RAMP) en mode de dévoltage et un second signal de rampe (BOOST RAMP) en mode de survoltage,
et un bloc de commande de chevauchement (20) fournissant un signal de décalage de rampe (RAMP_SHIFT) au générateur de rampe (16) en réponse à un signal de détection qui indique une activité de l'ensemble de commutateurs dans l'étage de puissance ;
et **caractérisé en ce que**
le bloc générateur de rampe (16 ; figure 4) comporte des sources de courant et des condensateurs pour générer les signaux de rampe, et les courants de charge aux condensateurs sont modulés pour augmenter ou diminuer les niveaux des signaux de rampe en réponse au signal de décalage de rampe (RAMP_SHIFT), ajustant ainsi les premier et second signaux de rampe (BUCK RAMP, BOOST RAMP) l'un par rapport à l'autre de manière à minimiser tout écart et tout chevauchement entre les premier et second signaux de rampe.

2. Convertisseur selon la revendication 1, dans lequel le signal de rampe pour le mode de dévoltage (RAMP_BUCK) a un front montant et le signal de rampe pour le mode de survoltage (RAMP_BOOST) a un front descendant.

3. Convertisseur selon la revendication 1 ou la revendication 2, dans lequel le niveau du signal de rampe pour le mode de survoltage (BOOST RAMP) est décalé vers le bas pour augmenter le chevauchement entre les premier et second signaux de rampe et le niveau du signal de rampe pour le mode de dévoltage (BUCK RAMP) est décalé vers le bas pour diminuer le chevauchement entre les premier et second signaux de rampe.

4. Convertisseur selon l'une quelconque des revendications 1 à 3, dans lequel le bloc générateur de rampe (16 ; figure 4) comporte une source de courant qui fournit un courant proportionnel à la tension d'entrée.

5. Convertisseur selon l'une quelconque des revendications 1 à 4, dans lequel le bloc générateur de rampe (16 ; figure 4) comporte une source de courant qui fournit un courant proportionnel à la tension de sortie.
